(19) Europäisches Patentamt
European Patent Office
Office européen des brevets

(11) Veröffentlichungsnummer : **0 024 323**
**B1**

(12) # EUROPÄISCHE PATENTSCHRIFT

(45) Veröffentlichungstag der Patentschrift : **05.01.83**

(51) Int. Cl.$^3$ : **B 60 C 1/00**, C 08 G 18/10, C 08 G 18/72

(21) Anmeldenummer : **80104581.6**

(22) Anmeldetag : **02.08.80**

(54) **Verfahren zur Herstellung von dynamisch besonders belastbaren Luftreifen.**

(30) Priorität : **16.08.79 DE 2933165**

(43) Veröffentlichungstag der Anmeldung : **04.03.81 Patentblatt 81/09**

(45) Bekanntmachung des Hinweises auf die Patenterteilung : **05.01.83 Patentblatt 83/01**

(84) Benannte Vertragsstaaten : **AT BE DE FR GB IT NL SE**

(56) Entgegenhaltungen :
**FR A 1 479 890**
**FR A 2 020 943**
**FR A 2 100 269**
**FR A 2 187 764**

(73) Patentinhaber : **BAYER AG**
**Zentralbereich Patente, Marken und Lizenzen**
**D-5090 Leverkusen 1, Bayerwerk (DE)**

(72) Erfinder : **Ganster, Otto, Dr.**
**Berliner Strasse 64**
**D-5090 Leverkusen 1 (DE)**
Erfinder : **Schwindt, Jürgen, Dr.**
**Kleist-Platz 4**
**D-5090 Leverkusen 1 (DE)**

**EP 0 024 323 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von dynamisch besonders belastbaren Luftreifen

Die Erfindung betrifft die Herstellung von Luftreifen aus nichtzelligen Polyharnstoff-Polyurethan-Elastomeren durch Gießen oder Schleudergießen flüssiger Reaktionssysteme.

Die Herstellung von Luftreifen auf Basis von Polyharnstoff-Polyurethan-Gießsystemen ist an sich bekannt. So wird z.B. in der US-PS 4 029 730 die Herstellung einer Karkassen-Seitenwand unter Verwendung von Alkalisalz-Komplexen des 4,4'-Diaminodiphenylmethans als Kettenverlängerer beschrieben. Derartige Kettenverlängerer liefern aber z.B. mit Polypropylenoxidpolyolen auf diese Weise kein für Luftreifen ausreichendes Eigenschaftsniveau (siehe Tabelle 1 und 5A, Beispiel 18). Ein weiterer Nachteil ist die bei dem Verfahren gemäß dieser US-PS erforderliche hohe Formentemperatur von 130 °C, während erfindungsgemäß mit wesentlich niedrigeren Formentemperaturen (50 bis 80 °C) gearbeitet werden kann.

Die US-PS 3 963 681 betrifft die Verwendung von speziellen Gemischen von Polyetherpolyolen zwecks Herstellung von Gießreifen. Diese speziellen Gemische zeichnen sich dadurch aus, daß sie mindestens einen Polyether enthalten, dessen Molekulargewicht größer ist als das « kritische rheologische Molekulargewicht ». Unter dieser Voraussetzung wird den gemäß US-PS 3 963 681 hergestellten Elastomeren eine besonders gute Dauerbiegefestigkeit zugeschrieben.

Es wurde indessen gefunden, daß die Verwendung langkettiger Polyolanteile grundsätzlich zu einer starken Erhöhung der plastischen Verformung der Reifen im Hochgeschwindigkeitstest führt (s. Tabelle 4 : Beispiele 7, 8, 9 : dyn. Umfangswachstum bei Test-Ende). So unterscheidet sich die vorliegende Erfindung wesentlich dadurch, daß der spezielle Effekt der geringen plastischen Verformung unter dynamischer Belastung nur mit solchen Polyolen zu erzielen ist, deren Molekulargewicht erheblich unterhalb der die US-PS 3 963 681 kennzeichnenden Grenze liegen.

In der DE-OS 2 633 457 wird die Nachvernetzung von Elastomeren mit reaktiven Füllstoffen zwecks Verbesserung des Eigenschaftsniveaus beschrieben. Abgesehen von weiteren Unterschieden wird bei dem erfindungsgemäßen Verfahren dieser Reaktionsschritt vermieden. Die DE-OS 2 622 951 beschreibt ein Verfahren zur Herstellung elastischer Formkörper im one-shot-Verfahren. Indessen verhindert die für die one-shot-Verarbeitung von aromatische Diamine enthaltenden Formulierungen typische hohe Reaktivität die Herstellung technisch einwandfreier Reifen im Gieß- oder Schlenderguß-Verfahren. Außerdem besitzen die one-shot-Elastomere eine zu hohe plastische Verformbarkeit.

Mit der vorliegenden Erfindung gelingt es nun sogar, unter Verwendung der wohlfeilen und gut zugänglichen Polypropylenoxidpolyole dynamisch hochbelastbare Luftreifen mit niedriger plastischer Verformbarkeit im Gieß- oder Schleudergießverfahren herzustellen. Die erfindungsgemäß einzusetzenden Formulierungen besitzen eine mittlere Reaktivität, welche einerseits die Herstellung großer (Traktoren-) Reifen ermöglicht, andererseits auch Formstandzeiten von nur 15 Minuten und weniger zu realisieren gestattet, wobei die Aushärtung bei Form- und Rohstoff-Temperaturen von 50 bis 85 °C verläuft.

Gegenstand der vorliegenden Erfindung ist somit ein Verfahren zur Herstellung von dynamisch besonders belastbaren Luftreifen mit niedriger plastischer Verformbarkeit durch Gießen oder Schleudergießen flüssiger Reaktionssysteme, für deren Verarbeitung und rasche Aushärtung Temperaturen von höchstens 85 °C erforderlich sind, bestehend aus

a) NCO-Prepolymeren oder -Semiprepolymeren, die aus mindestens einer Polyhydroxylverbindung einer OH-Funktionalität von 2,0 bis 2,2 und Polyisocyanaten erhalten worden sind,
b) aromatischen Diaminen als Kettenverlängerern,
c) Katalysatoren und
d) Hilfsstoffen,

dadurch gekennzeichnet, daß die zur Herstellung der NCO-Prepolymere bzw. -Semiprepolymere gemäß a) verwendete Polyhydroxylverbindung ein mittleres Molekulargewicht von 1 000 bis 3 000, vorzugsweise 1 300 bis 2 500, aufweist, wobei mehrkomponentige Polyhydroxylverbindungen durch Abmischen von Polyhydroxylverbindungen vom Molekulargewichtsbereich 500 bis 4 000 erhalten werden, als Polyisocyanate zur Herstellung der NCO-Prepolymere bzw. -Semiprepolymere gemäß a)

— Hexamethylendiisocyanat-(1,6) oder
— 2,4 -bzw. 2,6-Toluylendiisocyanat, sowie beliebige Gemische dieser Isomeren, oder
— 4,4' -bzw. 2,4'-Diisocyanatodiphenylmethan, sowie beliebige Gemische dieser Isomeren, oder
— in ortho-Stellung zu den NCO-Gruppen ein- bis vierfach $C_1$-$C_4$-alkyliertes Diisocyanatodiphenylmethan

eingesetzt werden, in den NCO-Prepolymeren bzw. -Semiprepolymeren das Molverhältnis von Polyhydroxylverbindung zum Polyisocyanat im Bereich 1 : 1,5 bis 1 : 4,0, vorzugsweise 1 : 1,5 bis 1 : 3,0, liegt und als Kettenverlängerer b) die Diamine

(Siehe das Schema, Seite 3)

I :

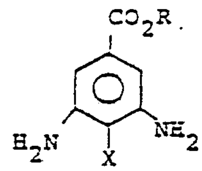

$R = -C_nH_{2n+1}$ (n = 4-10)
bevorzugt : $C_4H_9-$
$-CH_2-CH-(CH_2)_3-CH_3$
$C_2H_5$

$X = CH_3-$, Cl

oder

II :

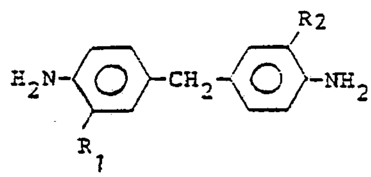

$R_1$ und $R_2$ (gleich oder verschieden) = $C_2H_5-$, $C_3H_7-$, $C_4H_9-$,
bevorzugt : $R = C_2H_5-$

oder

III :

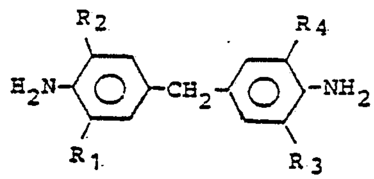

$R_1$-$R_4$ (gleich oder verschieden) = $C_2H_5-$, $C_3H_7-$,
besonders bevorzugt :
$R_1$, $R_2 = C_2H_5-$
$R_3$, $R_4 = C_3H_7-$

oder

IV :

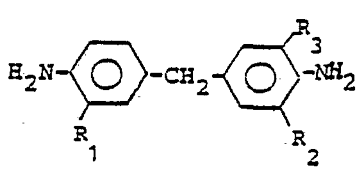

$R^1$-$R_3$ (gleich oder verschieden) = $C_2H_5-$, $C_3H_7-$, $C_4H_9-$
besonders bevorzugt :
$R_1$-$R_3 = C_2H_5-$, gegebenenfalls im Gemisch miteinander, eingesetzt werden.

Als Ausgangskomponenten für das erfindungsgemäße Verfahren werden eingesetzt :

1. NCO-Prepolymere oder Semi-Prepolymere, die aus mindestens einer Polyhydroxylverbindung mit einer OH-Funktionalität von 2,0 bis 2,2 und den bereits genannten Polyisocyanaten erhalten worden sind. Von den Polyisocyanaten sind 2,4- und 2,6-Toluylendiisocyanat und beliebige Gemische dieser Isomeren besonders bevorzugt, vorteilhaft sind aber erfindungsgemäß auch 2,4'- und 4,4'-Diisocyanatodiphenylmethan und beliebige Gemische dieser Isomeren und in ortho-Stellung zu den NCO-Gruppen ein- bis vierfach $C_1$-$C_4$-alkyliertes Diisocyanatodiphenylmethan. Gemische von 2,4- und 2,6-Toluylendiisocyanat mit einem Gehalt von mindestens 20 Gew.-% an 2,6-Isomeren, Gemische von 2,4'- und 4,4'-Diisocyanato-

diphenylmethan mit einem Gehalt von mindestens 30 Gew.% an 2,4'-Isomeren sind besonders bevorzugt.

Als in o-Stellung zu den NCO-Gruppen $C_1$-$C_4$-alkyliertes Diisocyanato-diphenylmethan kommen folgende Verbindungen, auch im Gemisch miteinander, in Frage :

(R = gleich oder verschieden, $CH_3$, $C_2H_5$, $C_3H_7$, $C_4H_9$ ; bevorzugt $CH_3$, $C_2H_5$, $C_3H_7$ ; besonders bevorzugt $CH_3$, $C_2H_5$).

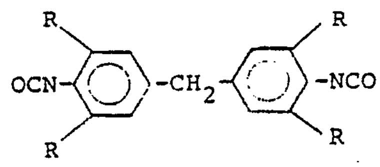

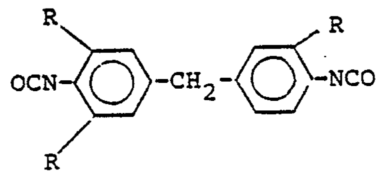

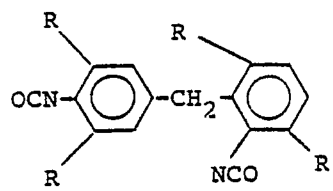

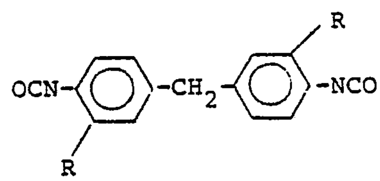

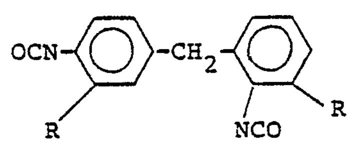

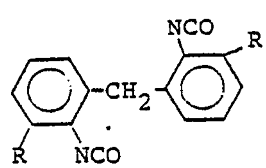

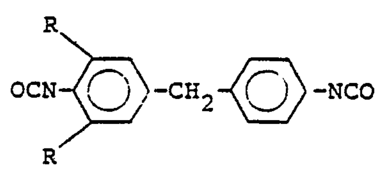

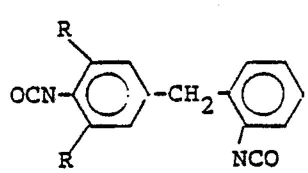

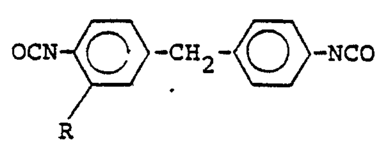

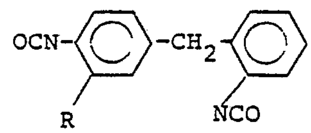

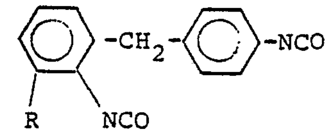

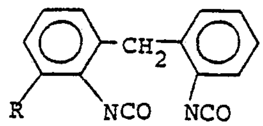

Es ist auch möglich, die genannten Polyisocyanate durch Einfügung von Carbodiimid-, Urethan-, Allophonat-, Isocyanurat-, Harnstoff- oder Biuret-Gruppen zu modifizieren.

Die mit den genannten Polyisocyanaten zu den NCO-Prepolymeren oder -Semiprepolymeren umzusetzende Polyhydroxylverbindung hat eine OH-Funktionalität von 2,0 bis 2,2 und ein mittleres Molekulargewicht von 1 000 bis 3 000, vorzugsweise 1 300 bis 2 500. Sie besteht entweder aus einer einzigen Komponente oder wird durch Abmischen mehrerer Polyhydroxylverbindungen vom Molekulargewichtsbereich 500-4 000 erhalten. Als Polyhydroxylverbindungen kommen mindestens zwei Hydroxylgruppen, im allgemeinen 2 bis 4 Hydroxylgruppen aufweisenden Polyester, Polyether, Polythioether, Polyacetale, Polycarbonate, Poly (capro) lactone und Polyesteramide in Frage, wie sie auch z.B. in der DE-OS 28 32 253, Seiten 11 bis 18, ausführlich beschrieben werden. Besonders bevorzugt sind zwei bis 4 Hydroxylgruppen aufweisende Polyether und Poly (capro)-lactone. Die Polyhydroxylverbindungen mit drei oder vier Hydroxylgruppen werden dabei anteilig mitverwendet, um die obengenannte OH-Funktionalität einzustellen.

2. Als Kettenverlängerer b) werden die nachfolgend genannten Diamine, gegebenenfalls im Gemisch miteinander verwendet :

I :

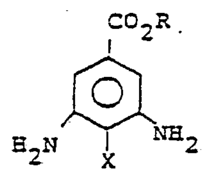

$R = C_nH_{2n+1}$ n = 4-10
$X = CH_3—$, Cl

oder

II :

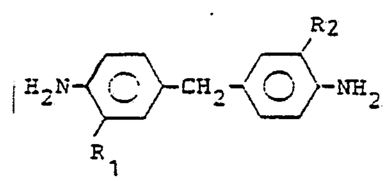

$R_1$ und $R_2$ (gleich oder verschieden) = $C_2H_5—$, $C_3H_7—$, $C_4H_9—$

oder

III :

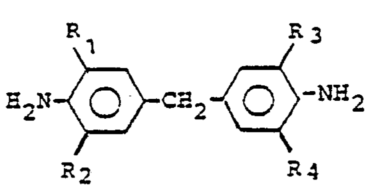

$R_1$-$R_4$ (gleich oder verschieden) = $C_2H_5$—, $C_3H_7$—,

oder

IV :

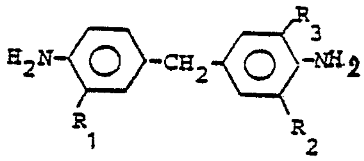

$R_1$-$R_3$ (gleich oder verschieden) = $C_2H_5$—, $C_3H_7$—, $C_4H_9$—

Die folgenden Kettenverlängerer sind erfindungsgemäß bevorzugt : das Diamin

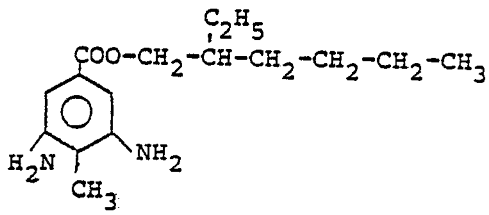

das Diamin

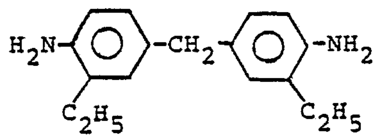

das Gemisch der Diamine

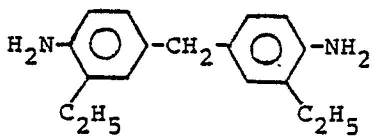

und

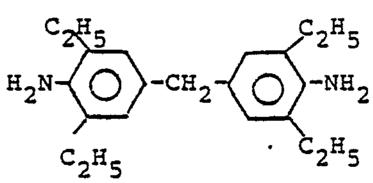

das Diamin

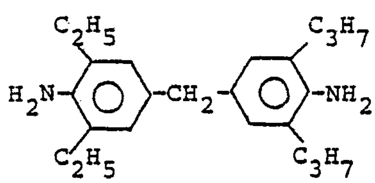

das Gemisch der Diamine

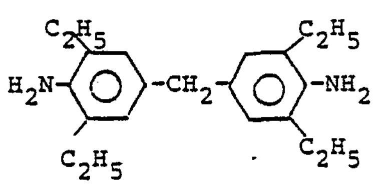

und

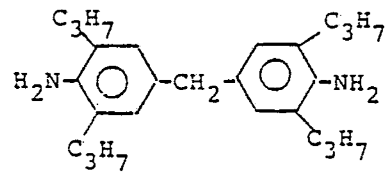

das Gemisch der Diamine

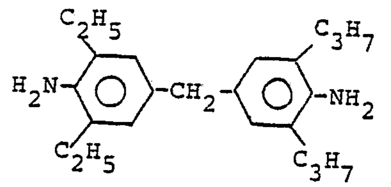

und

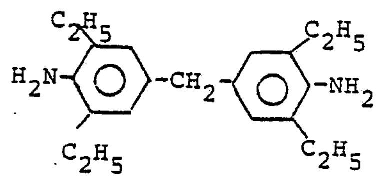

und

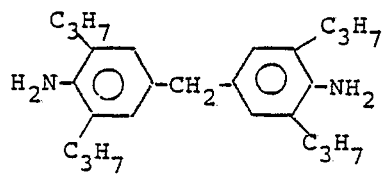

das Diamin

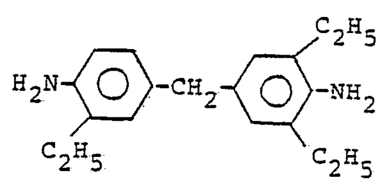

das Gemisch der Diamine

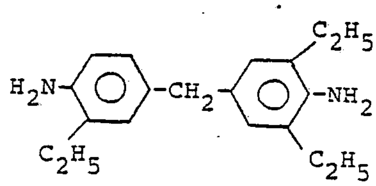

und

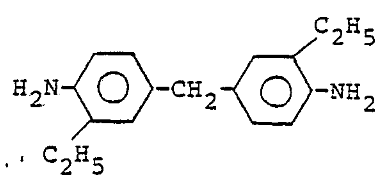

und

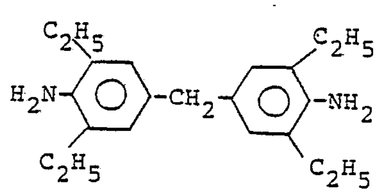

3. Als Katalysatoren c) sind anorganische oder organische Säuren wie Phosphorsäure, Dibutylphosphorsäureester, Ölsäure, Stearinsäure, Benzoesäure, Phthalsäuremonoalkylester, Adipinsäure geeignet. Auch Katalysatoren, wie sie aus der Polyurethanchemie bekannt sind z.B. tertiäre Amine, gegenüber Isocyanatgruppen aktive Wasserstoffatome aufweisende tertiäre Amine, Silaamine mit Kohlenstoff-Silizium-Bindungen, organische Metallverbindungen (insbesondere organische Zinnverbindungen), wie sie alle z.B. auch in der DE-OS 28 30 949 auf den Seiten 26 bis 29 beschrieben werden, kommen erfindungsgemäß in Betracht.

Selbstverständlich können alle Katalysatoren als Gemische eingesetzt werden. Von besonderem Interesse sind dabei auch Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.%, bezogen auf die Gesamtmenge an Reaktionsgemisch eingesetzt.

4. Als Hilfsstoffe d) können Pigmente ode Farbstoffe und Flammschutzmittel der an sich bekannten Art, z.B. Tris-chlorethylphosphat, Trikresylphosphat oder Ammoniumphosphat und -polyphosphat eingesetzt werden, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden Zusatzstoffen und Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens :

Die Reaktionskomponenten werden erfindungsgemäß nach dem an sich bekannten Prepolymerverfahren oder dem Semiprepolymerverfahren zur Umsetzung gebracht, wobei man sich oft maschineller Einrichtungen bedient. Die Umsetzung der Prepolymere bzw. Semiprepolymere mit den aromatischen Diaminen erfolgt bei Rohstoff- und Formentemperaturen von 50 bis 85 °C auf Hochdruck-Dosieraggregaten mit rührwerksloser Zwangsvermischung, gegebenenfalls mit nachgeschalteter statischer oder (im Falle des Schleudergießens) dynamischer Nachvermischung.

Die aus Hexamethylen-diisocyanat-(1,6) erhaltenen Prepolymere oder Semiprepolymere werden bevorzugt mit den Diaminen der allgemeinen Formel III und die aus 4,4'- bzw. 2,4'-Diisocyanatodiphenylmethan sowie aus Gemischen dieser Isomeren erhaltenen Prepolymere oder Semiprepolymere werden bevorzugt mit den Diaminen der allgemeinen Formel I umgesetzt.

Die Formteile können je nach Katalyse nach 5 bis 30 Minuten entformt werden ; für optimale mechanische Festigkeit muß in der Regel für 8 Stunden bei 80 bis 110 °C nachgeheizt werden.

Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München, 1966, z.B. auf den Seiten 121 bis 205 beschrieben.

Erfindungsgemäß werden an sich bekannte « äußere Trennmittel », wie Siliconöle, Paraffinwachse oder Metallseifen, mitverwendet. Man kann aber auch sogenannte « innere Trennmittel », gegebenenfalls im Gemisch mit äußeren Trennmitteln, verwenden, wie sie z.B. aus den DE-Offenlegungsschriften 2 121 670 und 2 307 589 bekannt geworden sind.

## Beispiele

### 1. Versuchsdurchführung

Die im folgenden Text beschriebenen Beispiele werden charakterisiert durch

a) physikalisch-technologische Eigenschaftswerte, bestimmt an Prüfplatten

b) Messungen auf dem Reifenprüfstand an armierten sowie sicht armierten Reifen.

### 1.1 Herstellung der Prüfplatten

Plattenstärke : 2 mm, 6 mm

Formentemperatur : 80 °C

Maschine : EZ 3/12 (Hennecke GmbH, 5205 St. Augustin 1)

In einigen gekennzeichneten Fällen langsam verfestigender Reaktionsgemische wurde mit Handvermischung (Propellerrührer) gearbeitet.

1.2 Herstellung der Reifen

Dimension : 175-14
Profil : Sommerprofil
Form : Segmentierte Stahlform
Verfahren : Schleuderguß mit horizontal drehender Form, 300 UpM, Polyurethan-Hartschaum-Verlustkern

Trennmittel : Polyethylenwachsgemisch, gelöst in organischen Lösungsmittel [Acmosil 180 ST (Fa. Acmos, D 2800 Bremen 1, Postfach 833)]

Dosier- und Misch-aggregat : Eigenbauanlage für Hochdruckdosierung mit rührerloser Zwangsvermischung Pumpen : Bosch-Reihenkolbenpumpen Mischkopf : 4-Düsenmischkopf der Fa. Krauss-Maffei AG, Krauss-Maffei-Str. 2, 8000 München 50

Heizung : Pumpen, Leitungen und Mischkopf voll beheizbar.

Anmerkung : In einigen gekennzeichneten Fällen langsam verfestigender Reaktionsgemische wurde mit Handvermischung (Propellerrührer) gearbeitet.

Armierung : Auf den Polyurethan-Hartschaumkern werden vor dessen Einbau in den Formenhohlraum einige Lagen Polyester-Cord aufgewickelt.

Fig. 1 stellt eine Reifenform mit Polyurethan-Hartschaum-Verlustkern, Armierung und Wulstkabel dar.

Darin bedeuten :

(1) Bestandteile der Außenform
(2) Polyurethan-Hartschaum-Verlustkern
(3) Angußkegel
(4) Armierung
(5) Wulstkabel

## 2. Prüfungen

### 2.1. Platten

2.1.1. Zugversuch : DIN 53504

| | |
|---|---|
| — Spannungswert bei 100 % Dehnung : | σ100 |
| — Spannungswert bei 300 % Dehnung : | σ300 |
| — Zugfestigkeit : | σB |
| — Bruchdehnung : | σb |

| | |
|---|---|
| 2.1.2. Weiterreißversuch : | DIN 53 515 |
| 2.1.3. Härte : | DIN 53 505 |
| 2.1.4. Elastizität : | DIN 53 512 |
| 2.1.5. Verlauf des Schubmodul (G') als Funktion der Temperatur (T) | DIN 54 445 |

| | |
|---|---|
| — Schubmodul bei 20 °C | |
| — Dämpfung (tan δ) bei 20 °C | |
| — Dämpfungsmaximum : | $^T$tan δ (max) |
| — Dämpfungsminimum : | $^T$tan δ (min) |

### 2.2. Reifen

Prüfbedingungen in Anlehnung an den Hochgeschwindigkeitstest für PKW-Reifen des Department of Transportation in USA (DOT 109).

Last : 460 kg (– 30 kg Reifen und Felge)
Druck : 2,0 bar
Geschwindigkeit : 120 km/h-Dauer : 30 Minuten
128 km/h 30 Minuten
136 km/h 30 Minuten usw.
Sollwert : 160 km/h = 180 Minuten* Gesamt-Laufzeit
Trommeldurchmesser : 2 000 mm
Raumtemperatur : 30-38 °C

* Im Falle der nicht armierten Reifen der Tabelle 1 und 2 wurde, wenn möglich, über den Sollwert hinaus im 30 Minuten-Abstand die Geschwindigkeit bis zum Defekt weiter erhöht.

## 3. Beschreibung und Aufgaben der Beispiele

Tab. 1 : Zusammenfassung der Rezepturen zu Beispiel 5-24.

Tab. 2 : Die Beispiele 1 und 2 stehen für die Untersuchung der Leistungsfähigkeit konventioneller Polyurethan-Elastomeren in nicht armierten Reifen.

Tab. 3 : Die Beispiele 3 bis 6 liefern Ergebnisse an nicht armierten Reifen auf Basis von erfindungsgemäß zu verwendenden Polyolen bzw. -Polyolgemischen.

Tab. 4 : Die Beispiele 7, 8, 9 und 10 liefern Ergebnisse an armierten Reifen auf Basis von Polypropylenoxidgemischen.

Tab. 5 A : Die Beispiele 7, 12, 13, 19, 20, 21, 22, 23, 24, zeigen anhand von Platten-Prüfdaten eine Auswahl erfindungsgemäß geeigneter Kettenverlängerer und Isocyanate, während 11, 14, 15, 16, 17, 18 Beispiele für ungeeignete Kettenverlängerer sind.

Tab. 5 B : Die Beispiele 7, 12, 19, 20 zeigen erfindungsgemäß geeignete Kettenverlängerer anhand von Prüfdaten an armierten Reifen. 11 ist ein Beispiel für einen ungeeigneten Kettenverlängerer.

## 4. Rezepturen und Verarbeitungsbedingungen

### Beispiel 1

A. Reaktionsmischung

| | |
|---|---|
| Polyethylenadipat (Molekulargewicht 2 000) | 100 Gew.-Tle. |
| Naphthylendiisocyanat-(1,5) | 27 Gew.-Tle. |
| Butandiol-(1,4) | 6,2 Gew.-Tle. |

B. Kennzahl $\{^{n}NCO/_{n_{OH}}\}^{*} = 1,08$

C. Verarbeitung

Das Polyethylenadipat wird bei 130 °C im Vakuum auf weniger als 0,05 % Wasser getrocknet. Dann setzt man unter Rühren das Isocyanat in Schuppenform zu. Man rührt unter Vakuum bis zum Überschreiten des Temperaturmaximums, dann wird Butandiol-(1,4) zugegeben und das Reaktionsgemisch mit einem Propellerrührer von Hand homogenisiert (30-40 Sekunden). Dabei ist darauf zu achten, daß keine Luftblasen eingezogen werden. Dann muß das Reaktionsgemisch innerhalb 90 Sekunden in die auf 110 °C erhitzte Form eingegossen werden. Nach 15 Stunden kann entformt werden. Danach wird weitere 24 Stunden bei 110 °C nachgeheizt.

### Beispiel 2

A. Prepolymer :

| | |
|---|---|
| Polyethylenadipat (Molekulargewicht 2 000) | 1,0 Mol |
| 1,4-Diphenylmethandiisocyanat | 4,6 Mol |
| NCO-Gehalt | 9,5 % |

B. Kettenverlängerer : Butandiol-(1,4)

C. Mischungsverhältnis (A/B) = 100 Gew.Tle./9,68 Gew.Tle.

D. Kennzahl $\{^{n}NCO(Prepolymer\}/^{n}{}_{OH}) = 1,03$

E. Herstellung des Prepolymer :

Das Polyethylenadipat wird bei 120 °C im Vakuum auf einen Wassergehalt von weniger als 0,05 % getrocknet ; man kühlt dann auf 60-70 °C ab und rührt das Polyol mit einer solchen Geschwindigkeit in das bei gleicher Temperatur unter Vakuum vorgelegte Isocyanat, daß die Temperatur im Reaktionsgemisch im Bereich 70-80 °C gehalten werden kann. Nach Beendigung der Zugabe wird bei 70-80 °C weitere 3 Stunden gerührt.

F. Verarbeitung : durch Handvermischung mit Propellerrührer

| | |
|---|---|
| — Einsatztemperatur des Prepolymer : | 75 °C |
| — Einsatztemperatur des Butandiol : | Raumtemperatur |
| — Rührzeit : | 40 Sek. |
| — Gießzeit : | 100 Sek. |
| — Formentemperatur : | 110 °C |
| — Formstandzeit : | 15 h |
| — Nachheizbedingungen : | 24 h/110 °C |

*NCO-Äquivalente/OH-Äquivalente

Beispiel 3

A. Prepolymer :

| | |
|---|---|
| Polytetrahydrofuran (Molekulargewicht 1 000) : | 0,5 Mol |
| Polytetrahydrofuran (Molekulargewicht 2 000) : | 0,5 Mol |
| 2,4-Toluylendiisocyanat : | 2,6 Mol |
| NCO-Gehalt : | 4,8 % |
| Katalysator : Dibutylphosphat : | 0,3 % |

B. Kettenverlängerer : 4-Chlor-3,5-diaminobenzoesäureisobutylester
C. Mischungsverhältnis : (A/B) = 100 Gew.Tle./13,4 Gew.Tle.
D. Kennzahl $\{^nNCO(Prep.)/n_{NH_2}\} = 1,03$
E. Herstellung des Prepolymer : s. Beispiel 2
F. Verarbeitung : durch Handvermischung mit Propellerrührer

| | |
|---|---|
| — Einsatztemperatur des Prepolymer : | 95 °C |
| — Einsatztemperatur des Kettenverl. : | 85 °C |
| — Rührzeit : | 60 Sek. |
| — Gießzeit : | 100 Sek. |
| — Formentemperatur : | 110 °C |
| — Formstandzeit : | 5 h |
| — Nachheizbedingungen : | 12 h/100 °C |

Beispiel 4

A. Prepolymer :

| | |
|---|---|
| Polyethylenadipat (Molekulargewicht 2 000) : | 1,0 Mol |
| 2,4-Toluylendiisocyanat : | 2,1 Mol |
| NCO-Gehalt : | 3,9 % |
| Katalysator : Dibutylphosphat : | 0,3 % |

B. Kettenverlängerer : 4-Chlor-3,5-diaminobenzoesäureisobutylester
C. Mischungsverhältnis : (A/B) = 100 Gew. Tle./10,9 Gew. Tl.
D. Kennzahl $\{^nNCO(Prep.)/n_{NH_2}\} = 1,03$
E. Herstellung des Prepolymer : s. Beispiel 2
F. Verarbeitung : Propellerrührer, Handvermischung

| | |
|---|---|
| — Einsatztemperatur des Prepolymer : | 80 °C |
| — Einsatztemperatur Kettenverl. : | 85 °C |
| — Rührzeit : | 30 Sek. |
| — Gießzeit : | 100 Sek. |
| — Formstandzeit : | 5 h |
| — Nachheizbedingungen : | 12 h/100 °C |

Beispiele 5-24

A. Prepolymere :

Der Aufbau der in den Beispielen 5-24 benutzten Prepolymere auf Basis difunktioneller Polypropylenoxidpolyole ist in Tab. 1 aufgelistet. Die Herstellung der Prepolymere erfolgt analog der Vorschrift in Beispiel 2.

B. Kettenverlängerer :
In Tabelle 1 sind die Kettenverlängerer mit den römischen Zahlen I-XI bezeichnet :

I : 4-Chlor-3,5-diamino-benzoesäure-isobutylester
II : 4-Methyl-3,5-diamino-benzoesäure-(2-ethylhexyl)-ester
III : Diethyltolamin
IV : 4-Methyl-3,5-diaminobenzoesäure-isobutylester
V : 3,3'-Dichlor-4,4'-diamino-diphenylmethan (MOCA)
VI : 3,3'-Biscarbethoxy-4,4'-diaminodiphenylmethan
VII : 3,3'-Bisethoxy-4,4'-diaminodiphenylmethan
VIII : 3,3'-Bismethylmercapto-4,4'-diaminodiphenylmethan

IX : 4,4'-Diaminodiphenylmethan (MDA) als $(MDA)_3$. NaCl-Komplex, dispergiert zu 50 Gew.-% in Dioctylphthalat

X : Gemisch aus :

60 Gew.-% 3,5-Diethyl-3',5'-diisopropyl-4,4'-diaminodiphenylmethan

20 Gew.-% 3,5,3',5'-Tetraethyl-4,4'-diaminodiphenylmethan

20 Gew.-% 3,5,3',5'-Tetraisopropyl-4,4'-diaminodiphenylmethan

XI : 3,3'-Diethyl-4,4'-diaminodiphenylmethan

C. Mischungsverhältnisse : s. Tab. 1

In Tab. 1 ist die Gew.-Menge an Kettenverlängerer tabelliert, die für 100 Gew.-Teile Prepolymer benötigt wird.

D. Kennzahl : $\{^{n}NCO(Prep.)/n_{NH_2}\} = 1,03$

E. Verarbeitung : s. Tab. 1

Die Kettenverlängerer I, V, VI und IX erlauben eine manuelle Verarbeitung der Reaktionsgemische. Die übrigen Kettenverlängerer erfordern eine maschinelle Verarbeitung.

(Siehe die Tabelle, Seiten 13, 14 und 15)

Tabelle 1 : Rezepturen und Verarbeitung der Beispiele auf Basis von Polypropylenoxidpolyolen

| | Aufbau der Prepolymere | | | | | | Kettenverläng. | | Temperaturen (°C) | | | Entformung | |
|---|---|---|---|---|---|---|---|---|---|---|---|---|---|
| | Polyole | | Polyolgemisch | Isocyanat | | | | | | | | | |
| Beispiel Nr. | MG | (Mol) | MG | Produkt | (Mol) | % NCO | Prod. | Menge pro 100 g Prep. (g) | Prep. | Kettenverl. | Form | Reifen (h) | Platten (Min) |
| 5 | 1 000 | 1,0 | — | 2,4-TDI | 1,77 | 5,0 | I | 14,0 | 70 | 90 | 85 | 3 | 20 |
| 6, 12 | 1 000<br>2 000 | 0,6)<br>0,4) | 1 400 | 2,4-TDI | 2,0 | 4,7 | I | 13,2 | 70 | 90 | 85 | 3 | 20 |
| 7 | 1 000<br>2 000 | 0,6)<br>0,4) | 1 400 | 2,4-TDI | 2,0 | 4,7 | II | 15,1 | 70 | 50 | 70 | 0,5 | 8 |
| 11 | 1 000<br>2 000 | 0,6)<br>0,4) | 1 400 | 2,4-TDI | 2,0 | 4,7 | III | 9,7 | 70 | 25 | 70 | 0,5 | 8 |
| 13 | 1 000<br>2 000 | 0,6)<br>0,4) | 1 400 | 2,4-TDI | 2,0 | 4,7 | IV | 12,1 | 70 | 80 | 70 | 0,5 | 8 |
| 14 | 1 000<br>2 000 | 0,6)<br>0,4) | 1 400 | 2,4-TDI | 2,0 | 4,7 | V | 14,4 | 90 | 110 | 110 | — | 30 |
| 15 | 1 000<br>2 000 | 0,6)<br>0,4) | 1 400 | 2,4-TDI | 2,0 | 4,7 | VI | 18,6 | 70 | 100 | 110 | — | 30 |
| 16 | 1 000<br>2 000 | 0,6)<br>0,4) | 1 400 | 2,4-TDI | 2,0 | 4,7 | VII | 15,5 | 70 | 50 | 80 | — | 30 |

Tabelle 1 : Rezepturen und Verarbeitung der Beispiele auf Basis von Polypropylenoxidpolyolen (Fortsetzung)

| Beispiel Nr. | Aufbau der Prepolymere: Polyole MG | Polyole (Mol) | Polyolgemisch MG | Isocyanat Produkt | Isocyanat (Mol) | % NCO | Kettenverläng. Prod. | Kettenverläng. Menge pro 100 g Prep. (g) | Temperaturen (°C) Prep. | Temperaturen (°C) Kettenverl. | Temperaturen (°C) Form | Entformung Reifen (h) | Entformung Platten (Min) |
|---|---|---|---|---|---|---|---|---|---|---|---|---|---|
| 17 | 1 000<br>2 000 | 0,6)<br>0,4) | 1 400 | 2,4-TDI | 2,0 | 4,7 | VIII | 15,8 | 70 | 80 | 80 | — | 30 |
| 18 | 1 000<br>2 000 | 0,6)<br>0,4) | 1 400 | 2,4-TDI | 2,0 | 4,7 | IX | 23,8 | 70 | 70 | 120 | — | 60 |
| 19 | 1 000<br>2 000 | 0,6)<br>0,4) | 1 400 | 2,4-TDI | 2,0 | 4,7 | X | 18,4 | 60 | 50 | 70 | 0,5 | 5 |
| 20 | 1 000<br>2 000 | 0,6)<br>0,4) | 1 400 | 2,4-TDI | 2,0 | 4,7 | XI | 13,8 | 60 | 50 | 70 | 0,5 | 5 |
| 8 | 1 000<br>4 000 | 0,7)<br>0,3) | 1 900 | 2,4-TDI | 2,29 | 4,7 | II | 15,1 | 60 | 50 | 80 | 0,5 | 8 |
| 9 | 1 000<br>4 000 | 0,5)<br>0,5) | 2 500 | 2,4-TDI | 2,66 | 4,7 | II | 15,1 | 60 | 50 | 80 | 0,5 | 8 |
| 10 | 1 500 | 1,0 | — | 2,4-TDI | 2,04 | 4,7 | II | 15,1 | 60 | 50 | 70 | 0,5 | 8 |
| 21 | 1 000<br>2 000 | 0,6)<br>0,4) | 1 400 | 2,4-TDI<br>80 %<br>2,6-TDI<br>20 % | 2,0 | 4,7 | X | 18,4 | 60 | 50 | 70 | — | 5 |

Tabelle 1 : Rezepturen und Verarbeitung der Beispiele auf Basis von Polypropylenoxidpolyolen (Fortsetzung)

| Beispiel Nr. | Aufbau der Prepolymere: Polyole MG | Polyole (Mol) | Polyolgemisch MG | Isocyanat Produkt | Isocyanat (Mol) | % NCO | Kettenverläng. Prod. | Kettenverläng. Menge pro 100 g Prep. (g) | Temperaturen (°C) Prep. | Temperaturen (°C) Ketten-verl. | Temperaturen (°C) Form | Entformung Reifen (h) | Entformung Platten (Min) |
|---|---|---|---|---|---|---|---|---|---|---|---|---|---|
| 22 | 1 000<br>2 000 | 0,6)<br>0,4) | 1 400 | 2,4-TDI 40 %<br>2,6-TDI 60 % | 2,0 | 4,7 | X | 18,4 | 60 | 50 | 70 | — | 8 |
| 23 | 1 000<br>2 000 | 0,6)<br>0,4) | 1 400 | HDI | 2,0 | 4,8 | X | 18,8 | 60 | 50 | 80 | — | 10 |
| 24 | 1 000<br>2 000 | 0,6)<br>0,4) | 1 400 | 4,4'-MDI 60 %<br>2,4'-MDI 40 % | 2,0 | 3,7 | X | 13,0 | 60 | 50 | 70 | — | 5 |

Nachheizbedingungen : 8 h/80 °C
Ausnahme : Beispiel 18 : 3 h/130 °C

Tabelle 2 : Beispiele für Reifen aus nicht erfindungsgemäßen, konventionellen Elastomeren, nicht armiert

| Beispiel Nr. | Polyol | Mittl. Molekulargew. des Polyols | Isocyanat | NCO-Gehalt des Prep. | Kettenverlängerer | Dyn. Umfangswachstum (%) nach 30 Min/ 120 kmh | bei Testende | Laufz. (Min) | Defekt |
|---|---|---|---|---|---|---|---|---|---|
| 1 | Polyethylenadipat | 2 000 | MDI | — | Butandiol-(1,4) | 2,0 | 5,6 | 280 | zerst. |
| 2 | Polyethylenadipat | 2 000 | MDI | 9,5 % | Butandiol-(1,4) | 2,8 | 4,5 | 140 | zerst. |

Tabelle 3 : Beispiele für erfindungsgemäß verwendete Polyole, nicht armierte Reifen

| Beispiel Nr. | Molgew. der Polyole | Mittl. Molgew. des Polyolgemisches | Isocyanat | NCO-Gehalt des Prep. | Kettenverlängerer | Dyn. Umfangswachstum (%) nach 30 Min/ 120 kmh | bei Testende | Laufz. (Min) | Defekt |
|---|---|---|---|---|---|---|---|---|---|
| 3 | PTHF*, MG 1 000 + MG 2 000 | 1 500 | 2,4-TDI | 4,8 % | 4-Chlor-3, 5-diaminobenzoesäure-isobutylester | 3,9 | 4,4 | 59 | zerst. |
| 4 | Polyethylenadipat | 2 000 | 2,4-TDI | 3,6 % | 4-Chlor-3, 5-diaminobenzoesäure-isobutylester | 4,8 | 6,2 | 61 | zerst. |
| 5 | 1 000 | — | 2,4-TDI | 5,0 % | 4-Chlor-3, 5-diaminobenzoesäure-isobutylester | 1,9 | 5,5 | 240 | zerst. |
| 6 | 1 000 + 2 000 | 1 400 | 2,4-TDI | 4,8 % | 4-Chlor-3, 5-diaminobenzoesäure-isobutylester | 2,8 | 8,0 | 260 | zerst. |

* PTHF = Polytetrahydrofuran

Tabelle 4 : Einfluß des Polyol-Molekulargewichts, armierte Reifen

| Beispiel Nr. | Molgew. der Polyole | Mittlere Molgewichte des Polyolgemisches | Isocyanat | NCO-Gehalt des Prep. | Kettenverlängerer | Dyn. Umfangswachstum (%) nach 30 Min/ 120 kmh | bei Testende | Laufz. (Min) | Defekt |
|---|---|---|---|---|---|---|---|---|---|
| 7 | 1 000 + 2 000 | 1 400 | 2,4-TDI | 4,7 % | 4-Methyl-3, 5-Diaminobenzoesäure (2-ethylhexyl)-ester | 1,3 | 1,9 | 180 | — |
| 8 | 1 000 + 4 000 | 1 900 | 2,4-TDI | 4,7 % | 4-Methyl-3, 5-Diaminobenzoesäure (2-ethylhexyl)-ester | 1,1 | 2,9 | 180 | — |

Tabelle 4 (Fortsetzung)

| Beispiel Nr. | Molgew. der Polyole | Mittlere Molgewichte des Polyolgemisches | Isocyanat | NCO-Gehalt des Prep. | Kettenverlängerer | Dyn. Umfangswachstum (%) nach 30 Min/ 120 kmh | bei Testende | Laufz. (Min) | Defekt |
|---|---|---|---|---|---|---|---|---|---|
| 9 | 1 000 + 4 000 | 2 500 | 2,4-TDI | 4,7 % | 4-Methyl-3, 5-Diaminobenzoesäure (2-ethylhexyl)-ester | 1,3 | 4,0 | 180 | — |
| 10 | 1 500 | — | 2,4-TDI | 4,7 % | 4-Methyl-3, 5-Diaminobenzoesäure (2-ethylhexyl)-ester | 1,0 | 2,0 | 180 | — |

(Siehe die Tabellen 5A und 5B, Seiten 18 und 19)

Tabelle 5A : Beispiele zur Auswahl der erfindungsgemäßen Kettenverlängerer

| Beispiel | 11 | 12 (6) | 7 | 13 | 14 | 15 | 16 | 17 | 18 | 19 | 20 | 21 | 22 | 23 | 24 |
|---|---|---|---|---|---|---|---|---|---|---|---|---|---|---|---|
| Kettenverlängerer | III | I | II | IV | V | VI | VII | VIII | IX | X | XI | X | X | X | X |
| Zugversuch (DIN 53504) | | | | | | | | | | | | | | | |
| 100 % (MPa) | 5,26 | 8,03 | 7,08 | 8,56 | 3,64 | 3,07 | 1,74 | 3,86 | 0,80 | 6,95 | 8,12 | 8,13 | 10,6 | 5,99 | 5,23 |
| 300 % (MPa) | 8,36 | 9,97 | 8,86 | 9,91 | 5,63 | 4,41 | 4,11 | 5,91 | 1,24 | 8,00 | 8,56 | 10,7 | 12,3 | 7,79 | 7,31 |
| Zugfestigkeit (MPa) | 32,0 | 20,5 | 24,7 | 28,6 | 11,6 | 9,25 | 22,7 | 19,2 | 5,30 | 26,2 | 22,1 | 26,7 | 25,3 | 16,0 | 28,0 |
| Bruchdehnung (%) | 626 | 501 | 566 | 585 | 629 | 698 | 523 | 611 | 711 | 635 | 607 | 532 | 599 | 552 | 694 |
| Weiterreißwiderstand (DIN 53515) (kN/m) | 36,0 | 37,5 | 36,0 | 55,7 | 29,4 | 26,1 | 45,0 | 44,3 | 11,5 | 53,9 | 56,8 | 44,7 | 62,2 | 29,0 | 45 |
| Shore-A-Härte (DIN 53505) | 83 | 88 | 87 | 92 | 83 | 76 | 64 | 81 | 48 | 89 | 91 | 91 | 95 | 89 | 83 |
| Elastizität (DIN 53512) (%) | 51 | 41 | 50 | 47 | 40 | 26 | 16 | 28 | 16 | 43 | 47 | 38 | 44 | 55 | 40 |
| Schubmodul 20 °C (MPa) (DIN 53445) | 7,75 | 27 | 14 | 25 | – | – | 3,58 | 16,7 | 1,4 | 23 | 24,5 | – | 57,7 | 25,5 | – |
| Dämpfung (tan δ) (20 °C) | 0,061 | 0,092 | 0,059 | 0,12 | – | – | 0,53 | 0,17 | 0,41 | 0,089 | 0,078 | – | 0,065 | 0,040 | – |
| Dämpfungsmax. (°C) | – 25 | – 35 | – 30 | – 30 | – | – | + 10 | – 10 | + 6 | – 30 | – 32 | – | – 32 | – 42 | – |
| Dämpfungsmin. (°C) | + 70 | + 140 | + 70 | + 100 | – | – | + 110 | + 130 | + 70 | + 100 | + 100 | – | + 110 | + 95 | – |
| Eignung | – | + | + | + | – | – | – | – | – | + | + | + | + | + | + |

+ : geeignet } als Kettenverlängerer
– : nicht geeignet }

Tabelle 5B : Beispiele zur erfindungsgemäßen Auswahl der Kettenverlängerer ; armierte Reifen

| Beispiel Nr. | Molgew. der Polyole | Mittl. Molgew. des Polyolgemisches | Isocyanat | NCO-Gehalt des Prep. | Kettenverlängerer | Dyn. Umfangswachstum (%) nach 30 Min/ 120 kmh | Dyn. Umfangswachstum (%) bei Testende | Laufz. (Min) | Defekt |
|---|---|---|---|---|---|---|---|---|---|
| 11 | 1 000 + 2 000 | 1 400 | 2,4-TDI | 4,7 % | Diethyltolamin | — | 2,7 | 25 | starke Unwucht |
| 12 | 1 000 + 2 000 | 1 400 | 2,4-TDI | 4,7 % | 4-Chlor-3, 5-diaminobenzoesäureisobutylester | 1,0 | — | 180 | — |
| 7 | 1 000 + 2 000 | 1 400 | 2,4-TDI | 4,7 % | 4-Methyl-3, 5 diamino-benzoesäure (2-ethylhexyl)-ester | 1,3 | — | 180 | — |
| 19 | 1 000 + 2 000 | 1 400 | 2,4-TDI | 4,7 % | 3, 5-Diethyl-3', 5'-diisopropyl-4, 4'-diaminodiphenylmethan | 1,0 | — | 180 | — |
| 20 | 1 000 + 2 000 | 1 400 | 2,4-TDI | 4,7 % | 3, 3'-Diethyl-4, 4'-diaminodiphenylmethan | 0,9 | — | 180 | — |

**Ansprüche**

1. Verfahren zur Herstellung von dynamisch besonders belastbaren Luftreifen mit niedriger plastischer Verformbarkeit durch Gießen oder Schleudergießen flüssiger Reaktionssysteme, für deren rasche Aushärtung Temperaturen von höchstens 85 °C erforderlich sind, bestehend aus

a) NCO-Prepolymeren oder Semiprepolymeren, die aus mindestens einer Polyhydroxylverbindung einer OH-Funktionalität von 2,0 bis 2,2 und Polyisocyanaten erhalten worden sind,
b) aromatischen Diaminen als Kettenverlängerern,
c) Katalysatoren und
d) Hilfsstoffen,

dadurch gekennzeichnet, daß die zur Herstellung der NCO-Prepolymere bzw.-Semiprepolymere gemäß a) verwendete Polyhydroxylverbindung ein mittleres Molekulargewicht von 1 000 bis 3 000, vorzugsweise 1 300 bis 2 500, aufweist, wobei mehrkomponentige Polyhydroxylverbindungen durch Abmischen von Polyhydroxylverbindungen vom Molekulargewichtsbereich 500 bis 4 000 erhalten werden, als Polyisocyanate zur Herstellung der NCO-Prepolymere bzw.-Semiprepolymere gemäß a) Hexamethylendiisocyanat-(1,6) oder 2,4- bzw. 2,6-Toluylendiisocyanat, sowie beliebige Gemische dieser Isomeren, oder 4,4'- bzw. 2,4'-Diisocyanatodiphenylmethan, sowie beliebige Gemische dieser Isomeren, oder in ortho-Stellung zu den NCO-Gruppen ein- bis vierfach $C_1$-$C_4$-alkyliertes Diisocyanatodiphenylmethan eingesetzt werden, in den NCO-Prepolymeren bzw. -Semi-prepolymeren das Molverhältnis von Polyhydroxylverbindung zum Polyisocyanat im Bereich 1 : 1,5 bis 1 : 4,0 vorzugsweise 1 : 1,5 bis 1 : 3,0, liegt und als Kettenverlängerer b) die Diamine

I :

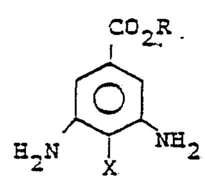

$R = —C_nH_{2n+1}$ (n = 4-10)
$X = CH_3—$, Cl ,

oder

II :

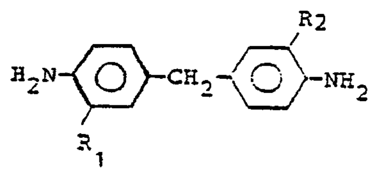

$R_1$ und $R_2$ (gleich oder verschieden) = $C_2H_5—$, $C_3H_7—$, $C_4H_9—$,

oder

III :

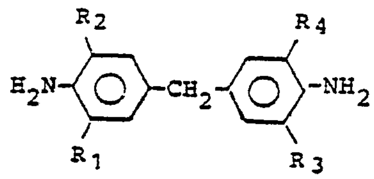

$R_1$-$R_4$ (gleich oder verschieden) = $C_2H_5—$, $C_3H_7—$,

oder

IV :

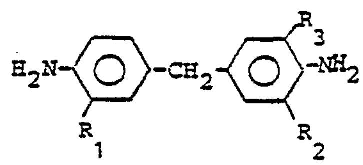

$R_1$-$R_3$ (gleich oder verschieden) = $C_2H_5—$, $C_3H_7—$, $C_4H_9—$, gegebenenfalls im Gemisch miteinander, eingesetzt werden.

2. Verfahren gemäß Anspruch 1, dadurch gekennzeichnet, daß als Kettenverlängerer b) das Diamin

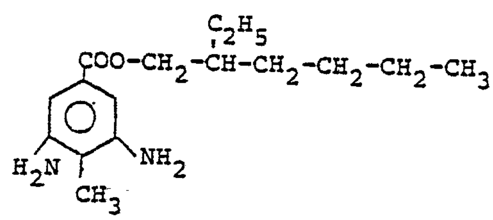

eingesetzt wird.

3. Verfahren gemäß Anspruch 1, dadurch gekennzeichnet, daß als Kettenverlängerer b) das Diamin

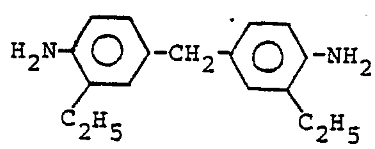

eingesetzt wird.

4. Verfahren gemäß Anspruch 1, dadurch gekennzeichnet, daß als Kettenverlängerer b) ein Gemisch der Diamine

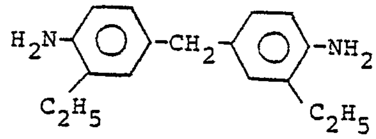

und

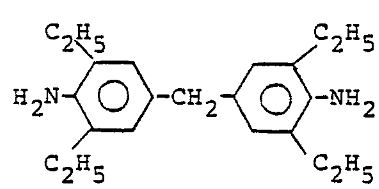

eingesetzt wird.

5. Verfahren gemäß Anspruch 1, dadurch gekennzeichnet, daß als Kettenverlängerer b) das Diamin

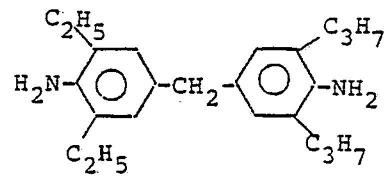

eingesetzt wird.

6. Verfahren gemäß Anspruch 1, dadurch gekennzeichnet, daß als Kettenverlängerer b) ein Gemisch der Diamine

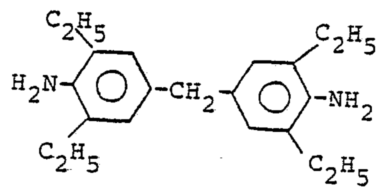

und

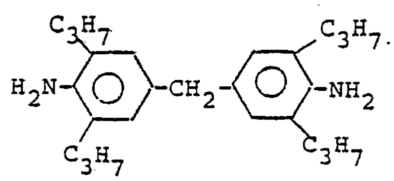

eingesetzt wird.

7. Verfahren gemäß Anspruch 1, dadurch gekennzeichnet, daß als Kettenverlängerer b) ein Gemisch der Diamine

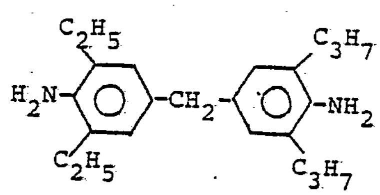

und

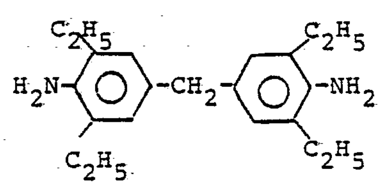

und

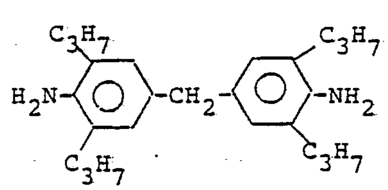

eingesetzt wird.

8. Verfahren gemäß Anspruch 1, dadurch gekennzeichnet, daß als Kettenverlängerer b) das Diamin

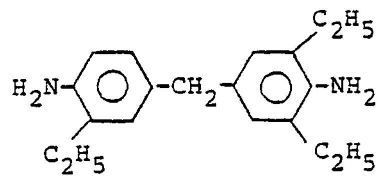

eingesetzt wird.

9. Verfahren gemäß Anspruch 1, dadurch gekennzeichnet, daß als Kettenverlängerer b) ein Gemisch der Diamine

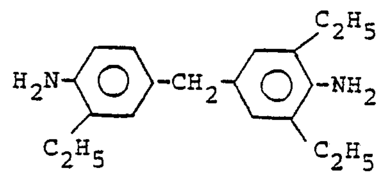

und

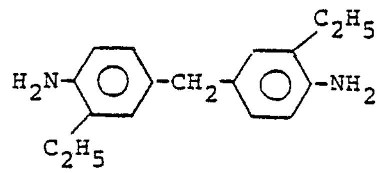

und

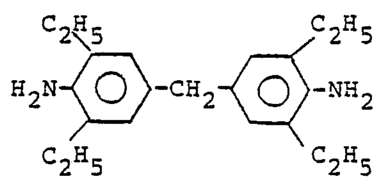

eingesetzt wird.

**Claims**

1. A process for the production of pneumatic tyres having particularly high dynamic strength and low plastic deformability by casting or centrifugally casting liquid reaction systems whose rapid hardening requires temperatures of a most 85 °C, consisting of :

a) NCO-prepolymers or semi-prepolymers which have been obtained from at least one polyhydroxyl compound having an OH-functionality of from 2.0 to 2.2 polyisocyanates,
b) aromatic diamines as chain-extenders,
c) catalysts and
d) auxiliaries,

characterised in that the polyhydroxyl compound used for producing the NCO-prepolymers or semi-prepolymers according (a) has an average molecular weight of from 1 000 to 3 000, preferably from 1 300 to 2 500, multicomponent polyhydroxyl compounds being obtained by mixing polyhydroxyl compounds having a molecular weight of from 500 to 4 000, the polyisocyanates used for producing the NCO-prepolymers or semi-prepolymers according to a) are 1,6-hexamethylene diisocyanate or 2,4- or 2,6-tolylene diisocyanate or mixtures thereof or 4,4'- or 2,4'-diisocyanatodiphenyl methane or mixtures thereof or diisocyanatodiphenyl methane $C_1$-$C_4$-alkylated from one to four times in the ortho position to the NCO-groups, the molar ratio of polyhydroxyl compound to the polyisocyanate in the NCO-prepolymers or semi-prepolymers is from 1 : 1.5 to 1 : 4.0, preferably from 1 : 1.5 to 1 : 3.0, and the diamines

I :

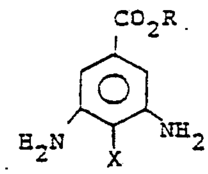

R = $-C_nH_{2n+1}$ (n = 4-10)
X = $CH_3-$, Cl

or

II :

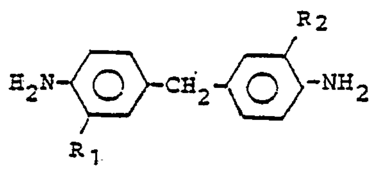

$R_1$ and $R_2$ (same or different) = $C_2H_5-$, $C_3H_7-$, $C_4H_9-$,

or

III :

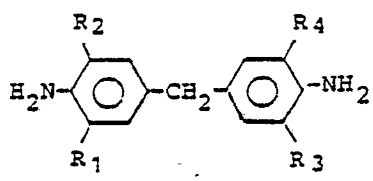

$R_1$-$R_4$ (same or different) $C_2H_5-$, $C_3H_7-$,

or

IV :

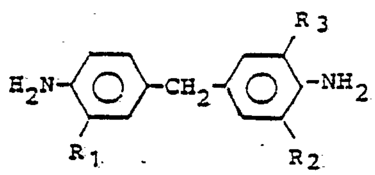

$R_1$-$R_3$ (same or different) = $C_2H_5-$, $C_3H_7-$, $C_4H_9-$
are used, optionally as mixtures as the chain-extenders b).

2. A process according to Claim 1, characterised in that the diamine

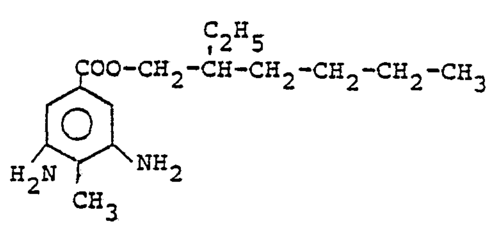

is used as the chain extender b).

3. A process according to Claim 1, characterised in that the diamine

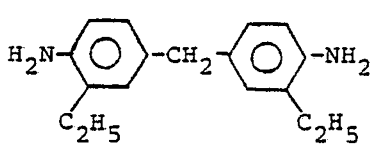

is used as the chain extender b).

4. A process according to Claim 1, characterised in that a mixture of the diamines

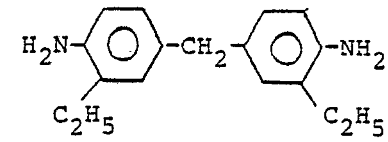

and

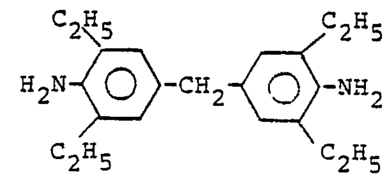

is used as the chain-extender b).

5. A process according to Claim 1, characterised in that the diamine

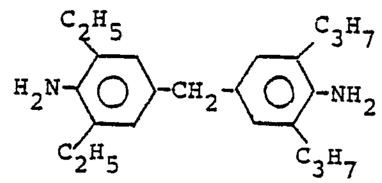

is used as the chain-extender b).

6. A process according to Claim 1, characterised in that a mixture of the diamines

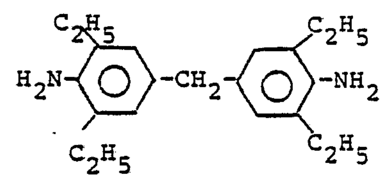

and

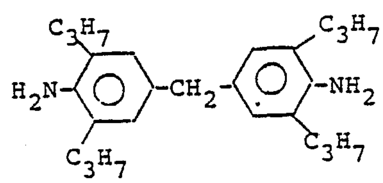

is used as the chain-extender b).

7. A process according to Claim 1, characterised in that a mixture of the diamines

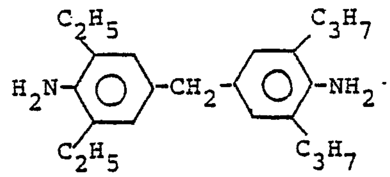

and

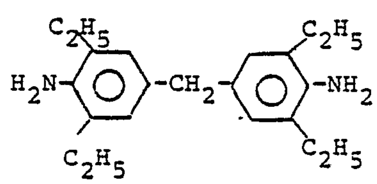

and

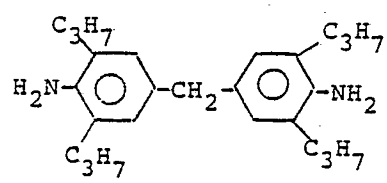

is used as the chain-extender b).

8. A process according to Claim 1, characterised in that the diamine

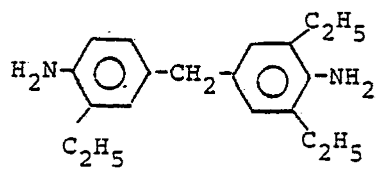

is used as the chain-extender b).

9. A process according to Claim 1, characterised in that a mixture of the diamines

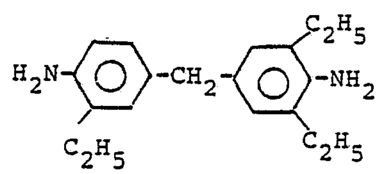

and

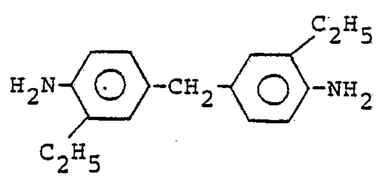

and

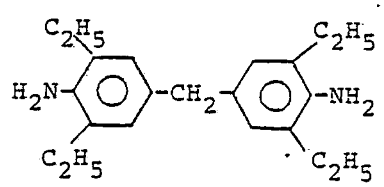

is used as the chain-extender b).

**Revendications**

1. Procédé de production de bandages pneumatiques à très haute capacité de charge dynamique et à faible déformabilité plastique par moulage ou moulage centrifuge de systèmes réactionnels liquides pour le durcissement rapide desquels des températures d'au maximum 85 °C sont nécessaires, composés de

a) prépolymères ou semiprépolymères de NCO, qui ont été obtenus à partir d'au moins un composé polyhydroxylique à fonctionnalité OH de 2,0 à 2,2 et de polyisocyanates,

b) diamines aromatiques comme agents d'allongement de chaîne,

c) catalyseurs et

d) substances auxiliaires,

caractérisé en ce que le composé polyhydroxylique utilisé pour la production des prépolymères ou semiprépolymères de NCO conformément à a) a un poids moléculaire moyen de 1 000 à 3 000, de préférence de 1 300 à 2 500, des composés polyhydroxyliques à plusieurs composants étant obtenus par

mélange de composés polyhydroxyliques ayant un intervalle de poids moléculaire de 500 à 4 000, on utilise comme polyisocyanates pour la production des prépolymères et semiprépolymères de NCO conformément à a) de l'hexaméthylènediisocyanate-(1,6) ou du 2,4- ou du 2,6-diisocyanatotoluylène, ainsi que des mélanges quelconques de ces isomères, ou du 4,4'- ou 2,4'-diisocyanatodiphénylméthane, ainsi que des mélanges quelconques de ces isomères, ou du diisocyanatodiphénylméthane mono- à tétraalkylé avec des groupes alkyle en $C_1$ à $C_4$ en position ortho par rapport aux groupes NCO, le rapport molaire du composé polyhydroxylique au polyisocyanate dans les prépolymères ou semiprépolymères de NCO se situe dans l'intervalle de 1 : 1,5 à 1 : 4,0, de préférence de 1 : 1,5 à 1 : 3,0, et on utilise comme agents d'allongement de chaîne b) les diamines

I :

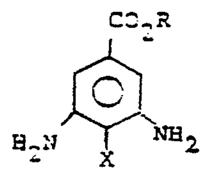

$R = —C_nH_{2n+1}$ (n = 4-10)
$X = CH_3—$, Cl

ou

II :

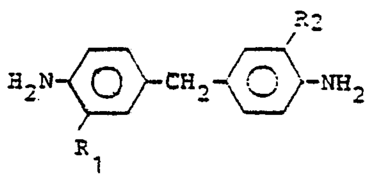

$R_1$ et $R_2$ (égaux ou différents) = $C_2H_5—$, $C_3H_7—$, $C_4H_9—$,

ou

III :

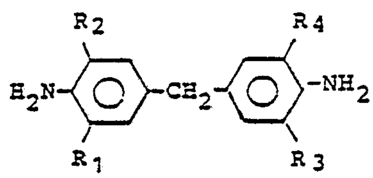

$R_1$-$R_4$ (égaux ou différents) = $C_2H_5—$, $C_3H_7—$,

ou

IV :

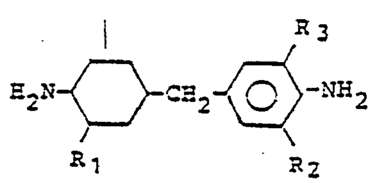

$R_1$-$R_3$ (égaux ou différents) = $C_2H_5—$, $C_3H_7—$, $C_4H_9—$
éventuellement en mélange les unes avec les autres.

2. Procédé suivant la revendication 1, caractérisé en ce qu'on utilise comme agent d'allongement de chaîne b) la diamine

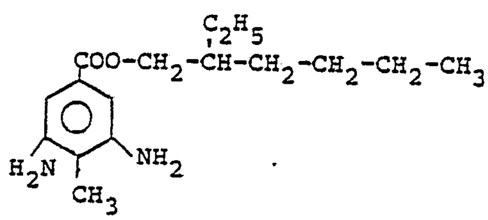

3. Procédé suivant la revendication 1, caractérisé en ce qu'on utilise comme agent d'allongement de chaîne b) la diamine

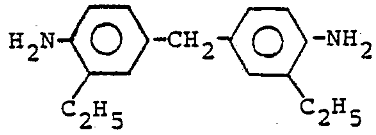

4. Procédé suivant la revendication 1, caractérisé en ce qu'on utilise comme agent d'allongement de chaîne b) un mélange des diamines

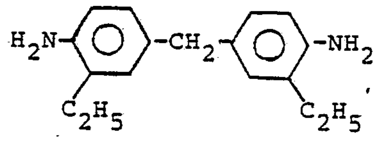

et

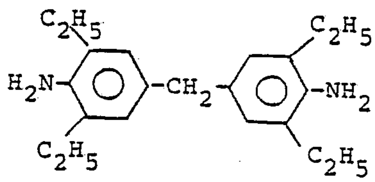

5. Procédé suivant la revendication 1, caractérisé en ce qu'on utilise comme agent d'allongement de chaîne b) la diamine

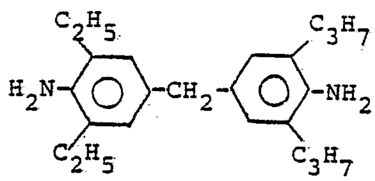

6. Procédé suivant la revendication 1, caractérisé en ce qu'on utilise comme agent d'allongement de chaîne b) un mélange des diamines

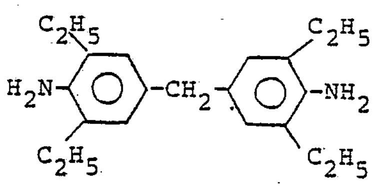

et

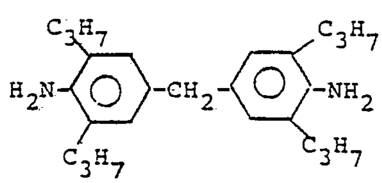

7. Procédé suivant la revendication 1, caractérisé en ce qu'on utilise comme agent d'allongement de chaîne b) un mélange des diamines

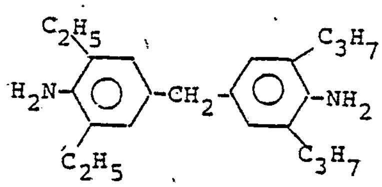

et

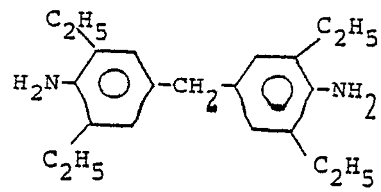

et

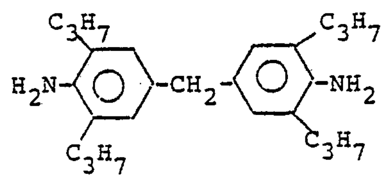

8. Procédé suivant la revendication 1, caractérisé en ce qu'on utilise comme agent d'allongement de chaîne b) la diamine

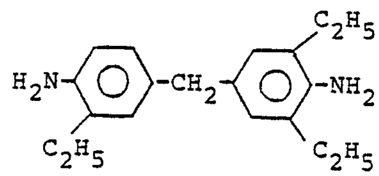

9. Procédé suivant la revendication 1, caractérisé en ce qu'on utilise comme agent d'allongement de chaîne b) un mélange des diamines

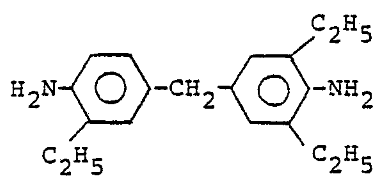

et

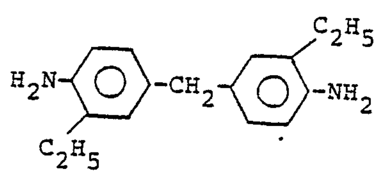

et

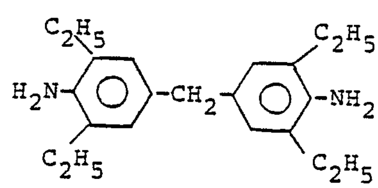

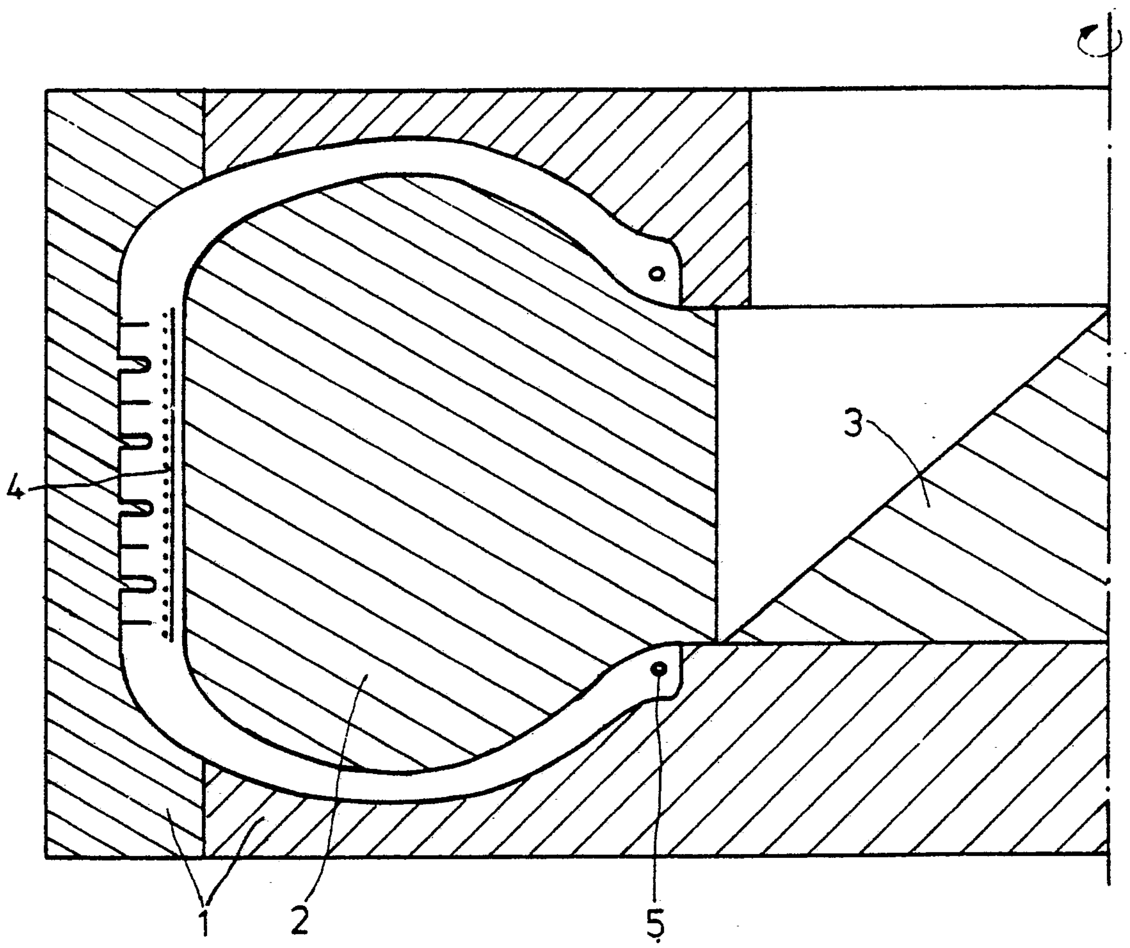


FIG. 1